# FASCICULE DE BREVET EUROPEEN

(11) **EP 2 792 838 B1**
(45) Date de publication et mention de la délivrance du brevet: **02.01.2019**
(21) Numéro de dépôt: 14165314.7
(22) Date de dépôt: 18.04.2014
(51) Int. Cl.: E21B 10/44, B23B 51/02, E21B 10/58

(54) **Plaquette de coupe**
Schneideplättchen
Cutting plate

(30) Priorité: 19.04.2013 FR 1353604
(43) Date de publication de la demande: 22.10.2014
(73) Titulaire: DIAGER, 39800 Poligny (FR)
(72) Inventeur: Lamy, Sylvain, 39800 POLIGNY (FR); Maurice, Dominique, 21110 GENLIS (FR)
(74) Mandataire: Chevalier, Renaud Philippe

(56) Documents cités:
- EP-A2- 1 125 663
- WO-A1-01/61142
- WO-A1-2009/135681
- WO-A1-2010/036498
- US-A1- 2002 195 279

## Description

La présente invention concerne une plaquette de coupe et un outil de perçage.

Une plaquette de coupe connue du déposant est divulguée dans le document US6860344. Cette plaquette de coupe comporte une âme s'étendant axialement et trois branches identiques s'étendant radialement depuis l'âme. Les branches sont décalées angulairement de 120°. Une autre plaquette de coupe est divulguée dans le document WO2010/036498. Cette plaquette de coupe comporte une âme s'étendant axialement et trois branches s'étendant radialement depuis l'âme.

Chaque branche présente une portion proximale connectée à l'âme, une portion distale, et une portion centrale reliant la portion proximale et la portion distale.

Chaque branche présente une arête de coupe s'étendant sur la portion proximale, la portion distale et la portion centrale. Chaque arête de coupe s'étend axialement au même niveau.

Un inconvénient d'une telle plaquette de coupe réside dans le fait que lors d'un perçage la pression exercée sur la plaquette de coupe est répartie en proportion égale sur chacune des arêtes de coupe. Par suite, la plaquette de coupe pénètre dans la matière avec difficulté. Ainsi, la vitesse de perçage est limitée et l'usure de la plaquette de coupe est plus importante.

L'invention vise à remédier à cet inconvénient.

L'invention concerne une plaquette de coupe conçue pour être fixée à une extrémité d'un corps d'outil afin d'être entrainée en rotation autour d'un axe, comportant :
- une âme s'étendant axialement ; et
- au moins une première branche et une deuxième branche s'étendant radialement depuis l'âme, la première branche et la deuxième branche comprenant chacune :
   - une portion proximale raccordée à l'âme, une portion distale, et une portion centrale raccordant la portion proximale et la portion distale ; et
   - une arête de coupe s'étendant au moins sur la portion distale et la portion centrale; l'arête de coupe de la deuxième branche étant, au moins en partie, axialement plus en avant que l'arête de coupe de la première branche, ladite plaquette de coupe comportant au moins une troisième branche comprenant :
      . une portion proximale raccordée à l'âme, une portion distale, et une portion centrale raccordant la portion proximale et la portion distale ; et
      . une arête de coupe s'étendant au moins sur la portion distale et la portion centrale; et caractérisée en ce que l'arête de coupe de la troisième branche est, au moins en partie, axialement plus en avant que l'arête de coupe de la deuxième branche.

Lors d'un perçage, le mouvement décrit par la plaquette de coupe est hélicoïdal. Le mouvement est ainsi une combinaison simultanée d'une translation et d'une rotation.

L'expression « radialement en avant » fait référence au sens de rotation de la plaquette de coupe.

L'expression « axialement en avant » fait référence au sens de translation de la plaquette de coupe.

Ainsi, la troisième branche est agencée pour supporter davantage de pression que la deuxième branche et que la première branche, de telle sorte que la pénétration de la plaquette de coupe soit facilitée. Par suite, la vitesse de perçage est augmentée.

Suivant une caractéristique, chaque arête de coupe de la première branche, la deuxième branche et la troisième branche comprend un point d'attaque disposé axialement en avant ; et
les points d'attaque de la première branche, de la deuxième branche et de la troisième branche sont disposés dans un même plan radial.

Lors de l'amorce du perçage, les points d'attaque de la première branche, de la deuxième branche et de la troisième branche reposent contre la matière. L'axe de la plaquette de coupe s'étend alors parfaitement perpendiculairement à la matière. Ainsi, le positionnement de la plaquette de coupe est facilité.

De préférence, chaque arête de coupe de la première branche, de la deuxième branche et/ou de la troisième branche comprend un point de traine disposé axialement en arrière ;
les points de traine de la première branche, de la deuxième branche et de la troisième branche sont disposés dans un même plan radial ; et
les arêtes de coupe de la deuxième branche et de la troisième branche s'étendent axialement plus en avant que l'arête de coupe de la première branche entre leur points d'attaque et leur points de traine respectifs.

Suivant une forme d'exécution, la portion centrale de la troisième branche est plus large que la portion distale de la troisième branche, de sorte que l'arête de coupe de la troisième branche présente un décrochement.

La portion centrale de la troisième branche plus large que la portion distale renforce la troisième branche et empêche sa rupture. La troisième branche peut ainsi supporter davantage de pression que la première branche et la deuxième branche.

De préférence, l'arête de coupe de la troisième branche présente une longueur inférieure à l'arête de coupe de la première branche et/ou à l'arête de coupe de la deuxième branche.

Ainsi, la troisième branche supporte encore plus de pression que la première branche et la deuxième branche. La pénétration de la plaquette de coupe est facilitée et la quantité de matière découpée à chaque rotation est accrue.

Avantageusement, les points d'attaque de la première branche, de la deuxième branche et de la troisième branche sont disposés autour d'un évidement ménagé à l'extrémité de l'âme.

Un tel évidement permet d'éviter que l'extrémité de l'âme, qui présente une vitesse de rotation nulle, ne vienne freiner la plaquette de coupe par frottement.

De préférence, l'évidement est centré sur l'axe de la plaquette de coupe.

Suivant une caractéristique, l'évidement présente un fond de profil général convexe.

Ainsi, lors du perçage le fond de l'évidement guide les copeaux de matière vers l'extérieur de l'évidement. Le risque d'accumulation de copeaux de matière et de bourrage à l'extrémité de l'âme est limité.

Avantageusement, la portion distale de la première branche est disposée radialement en avant par rapport à la portion centrale de la première branche ; et
la portion centrale de la deuxième branche est disposée radialement en avant par rapport à la portion distale de la deuxième branche.

En d'autres termes, en vue de dessus, la portion distale de la première branche est disposée en avant par rapport à la portion centrale de la première branche, l'avant se référant au sens de rotation.

La portion centrale de la deuxième branche est disposée en avant par rapport à la portion distale de la deuxième branche, l'avant se référant au sens de rotation.

Ainsi, l'arête de coupe de la première branche permet de guider vers l'intérieur les copeaux de matière en vue d'être évacués par le corps d'outil.

L'arête de coupe de la deuxième branche permet de guider vers l'extérieur le surplus de copeaux de matière n'ayant pu être évacués par le corps d'outil afin de limiter le risque de bourrage au niveau de l'âme.

Alors, la plaquette de coupe selon l'invention permet de faciliter l'évacuation des copeaux de matière.

Suivant une caractéristique, l'arête de coupe de la première branche présente, au moins sur la portion distale et la portion centrale, un profil concave ; et
l'arête de coupe de la deuxième branche présente, au moins sur la portion distale et la portion centrale, un profil convexe.

L'invention concerne enfin un outil de perçage, caractérisé en ce qu'il comporte :
- un corps d'outil; et
- une plaquette de coupe telle que présentée ci-avant, fixée à une extrémité du corps d'outil.

A titre d'exemple, l'extrémité du corps d'outil présente une fente et la plaquette de coupe est insérée dans cette fente et brasée.

L'invention sera mieux comprise à l'aide de la description qui suit, en référence au dessin schématique annexé représentant, à titre d'exemple, un outil de perçage selon l'invention.
Figure 1 est une vue en perspective d'un foret selon l'invention ;
Figure 2 est une vue en perspective d'une plaquette de coupe équipant le foret de figure 1 ;
Figure 3 est une vue de dessus de la plaquette de coupe de figure 2;
Figure 4 est une vue de côté de la plaquette de coupe de figure 2 ;
Figure 5 est un graphique représentant la position axiale des points constituant des arêtes de coupe de la plaquette de coupe de figure 2,
Figure 6 est un graphique représentant la position axiale des points constituant les arêtes de coupe de la plaquette de coupe d'une variante non représentée de la figure 2.

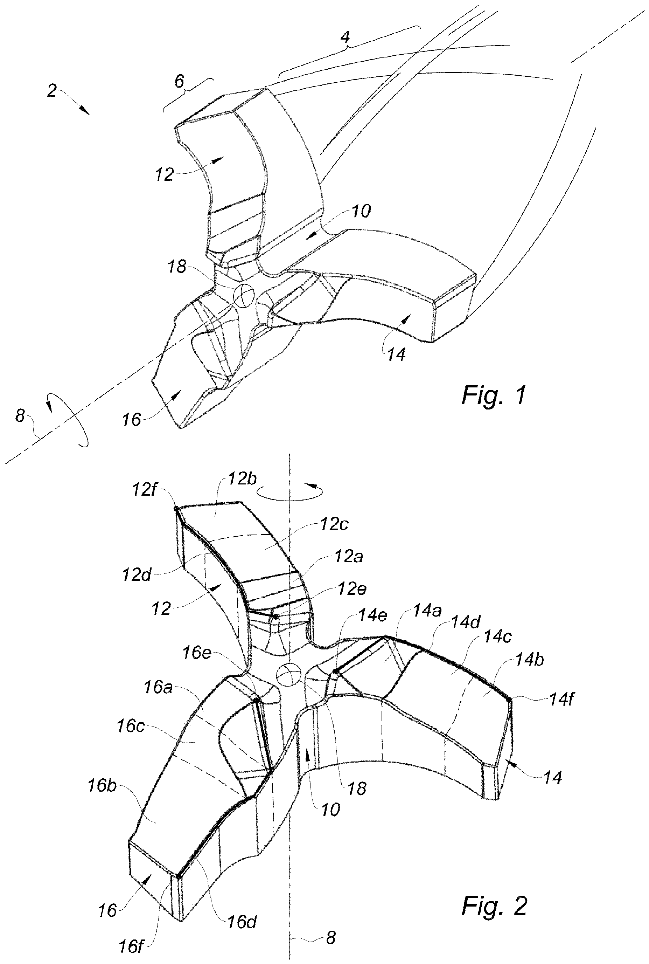

La figure 1 représente un foret 2. Ce foret 2 comporte un corps d'outil 4 et une plaquette de coupe 6 fixée à une extrémité du corps d'outil 4. Le corps d'outil 4 et la plaquette de perçage 6 sont conçus pour être entrainés en rotation autour d'un axe 8.

La plaquette de coupe 6 (mieux représentée aux figures 2 à 4) comporte une âme 10 s'étendant axialement.

La plaquette de coupe 6 comporte trois branches 12, 14, 16 s'étendant radialement depuis l'âme 10. Les branches 12, 14, 16 sont décalées angulairement de 120°.

Chaque branche 12, 14, 16 comprend une portion proximale respectivement 12a, 14a, 16a raccordée à l'âme 10, une portion distale respectivement 12b, 14b, 16b, et une portion centrale respectivement 12c, 14c, 16c raccordant la portion proximale 12a, 14a, 16a et la portion distale 12b, 14b, 16b.

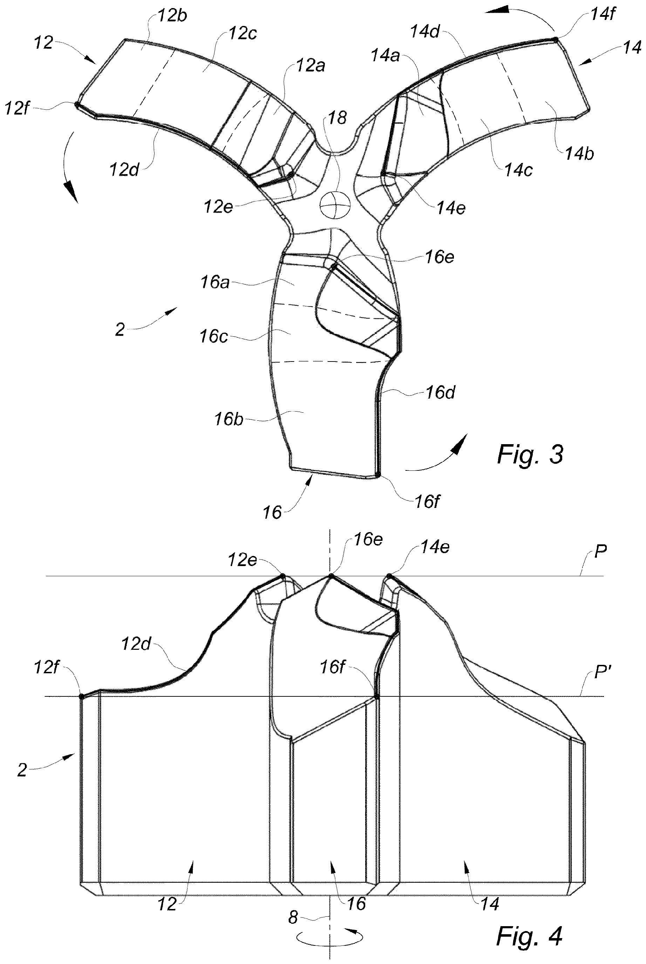

La portion distale 12b de la branche 12 est disposée radialement en avant par rapport à la portion centrale 12c (tel qu'il apparait mieux à la figure 3). La portion centrale 14c de la branche 14 est disposée radialement en avant par rapport à la portion distale 14b. La portion centrale 16c est plus large que la portion distale 16b.

Chaque branche 12, 14, 16 comprend une arête de coupe 12d, 14d, 16d s'étendant respectivement sur les portions 12a, 12b, 12c, 14a, 14b, 14c et 16a, 16b, 16c.

L'arête de coupe 12d de la branche 12 est courbe et présente, sur la portion distale 12b et la portion centrale 12c, un profil concave.

L'arête de coupe 14d de la branche 14 est courbe et présente, sur la portion distale 14b et la portion centrale 14c, un profil convexe.

L'arête de coupe 16d présente un décrochement radial.

L'arête de coupe 16d présente une longueur inférieure aux arêtes de coupe 12d, 14d.

Chaque arête de coupe 12d, 14d, 16d comprend un point d'attaque, respectivement 12e, 14e, 16e disposé axialement en avant. Les points d'attaque 12e, 14e, 16e sont disposés dans un même plan radial P.

Chaque arête de coupe 12d, 14d, 16d comprend un point de traine 12f, 14f, 16f, disposés axialement en arrière. Les points de traine 12f, 14f, 16f, sont disposés dans un même plan radial P'.

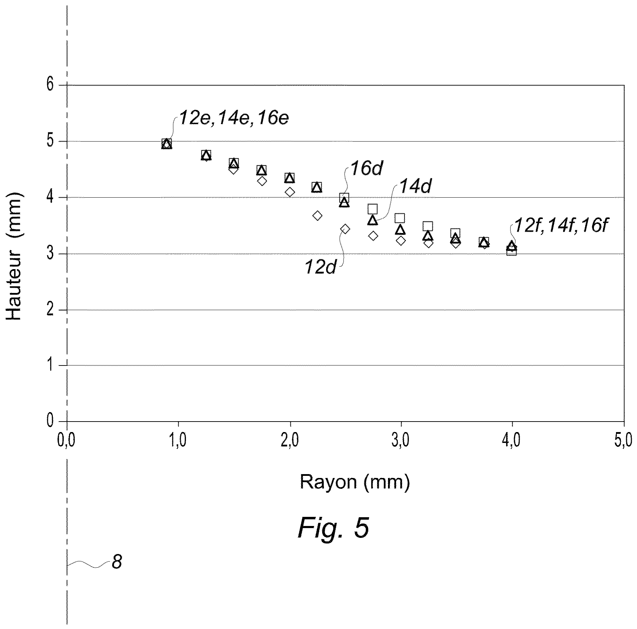

Les arêtes de coupe 14d, 16d sont axialement plus en avant que l'arête de coupe 12d entre les points d'attaque et les points de traine (tel qu'il apparait à la figure 5).

Les points d'attaque 12e, 14e, 16e sont disposés autour d'un évidement 18 ménagé à l'extrémité de l'âme 10. L'évidement 18 présente un fond de profil convexe. Plus spécifiquement, l'évidement 18 est bombé et présente une forme de calotte sphérique. L'évidement 18 est centré sur l'axe 8.

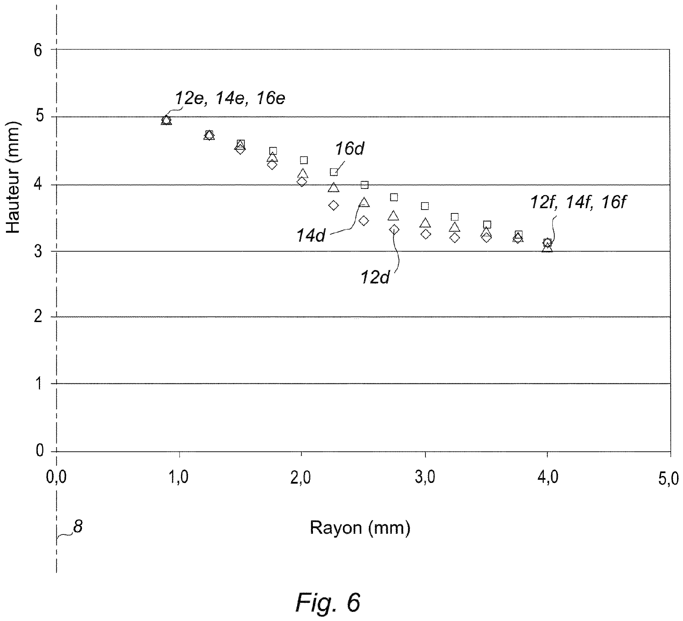

En figure 6, est représentée notamment une réalisation pour laquelle le décalage des hauteurs des arêtes de coupe 12d, 14d, 16d est renforcé. Cette configuration conduit à l'obtention d'une arête de coupe 16d quasi-linéaire sur la branche 16, cet effet pouvant produire un mécanisme de raclage en fond de trou, et de fait, un meilleur dégagement des débris résultant de l'opération de perçage. Bien entendu les caractéristiques décrites pour les figures 1 à 5 valent également pour la figure 6.

Ainsi, en variante le nombre de branches peut être encore supérieur à trois.

## Revendications

1. Plaquette de coupe (6) conçue pour être fixée à une extrémité d'un corps d'outil (4) afin d'être entrainée en rotation autour d'un axe (8), comportant :
- une âme (10) s'étendant axialement ; et
- au moins une première branche (12) et une deuxième branche (14) s'étendant radialement depuis l'âme (10), la première branche (12) et la deuxième branche (14) comprenant chacune :
• une portion proximale (12a, 14a) raccordée à l'âme (10), une portion distale (12b, 14b), et une portion centrale (12c, 14c) raccordant la portion proximale (12a, 14a) et la portion distale (12b, 14b); et
• une arête de coupe (12d, 14d) s'étendant au moins sur la portion distale (12b, 14b) et la portion centrale (12c, 14c); l'arête de coupe (14d) de la deuxième branche (14) étant, au moins en partie, axialement plus en avant que l'arête de coupe (12d) de la première branche (12) et ladite plaquette de coupe comportant au moins une troisième branche (16) comprenant une portion proximale (16a) raccordée à l'âme (10), une portion distale (16b), et une portion centrale (16c) raccordant la portion proximale (16a) et la portion distale (16b); et une arête de coupe (16d) s'étendant au moins sur la portion distale (16b) et la portion centrale (16c) ; et **caractérisée en ce que** l'arête de coupe (16d) de la troisième branche (16) est, au moins en partie, axialement plus en avant que l'arête de coupe (12d, 14d) de la deuxième branche (14).

2. Plaquette de coupe (6) selon la revendication 1, **caractérisée en ce que** chaque arête de coupe (12d, 14d, 16d) de la première branche (12), de la deuxième branche (14) et de la troisième branche (16) comprend un point d'attaque (12e, 14e, 16e) disposé axialement en avant, et **en ce que** les points d'attaque (12e, 14e, 16e) de la première branche (12), de la deuxième branche (14) et de la troisième branche (16) sont disposés dans un même plan radial (P).

3. Plaquette de coupe (6) selon la revendication 2, **caractérisée en ce que** chaque arête de coupe (12d, 14d, 16d) de la première branche (12), de la deuxième branche (14) et de la troisième branche (16) comprend un point de traine (12f, 14f, 16f) disposé axialement en arrière ; les points de traine (12f, 14f, 16f) de la première branche (12), de la deuxième branche (14) et de la troisième branche (16) sont disposés dans un même plan radial (P') ; et les arêtes de coupe (14d, 16d) de la deuxième branche (14) et/ou de la troisième branche (16) s'étendent axialement plus en avant que l'arête de coupe (12d) de la première branche entre leur points d'attaque (12e, 14e, 16e) et leur points de traine (12f, 14f, 16f) respectifs.

4. Plaquette de coupe (6) selon l'une quelconque des revendications 1 à 3, **caractérisée en ce que** la portion centrale (16c) de la troisième branche (16) est plus large que la portion distale (16b) de la troisième branche (16), de sorte que l'arête de coupe (16d) de la troisième branche (16) présente un décrochement.

5. Plaquette de coupe (6) selon l'une quelconque des revendications 1 à 4, **caractérisée en ce que** l'arête de coupe (16d) de la troisième branche (16) présente une longueur inférieure à l'arête de coupe (12d) de la première branche (12) et/ou à l'arête de coupe (14d) de la deuxième branche (14).

6. Plaquette de coupe (6) selon l'une quelconque des revendications2 à 5, **caractérisée en ce que** les points d'attaque (12e, 14e, 16e) de la première branche (12), de la deuxième branche (14) et de la troisième branche (16) sont disposés autour d'un évidement (18) ménagé à l'extrémité de l'âme (10).

7. Plaquette de coupe (6) selon la revendication 6, **caractérisé en ce que** l'évidement (18) présente un fond de profil général convexe.

8. Plaquette de coupe (6) selon l'une quelconque des revendications 1 à 7, **caractérisé en ce que** la portion distale (12b) de la première branche (12) est disposée radialement en avant par rapport à la portion centrale (12c) de la première branche (12), et la portion centrale (14c) de la deuxième branche (14) est disposée radialement en avant par rapport à la portion distale (14b) de la deuxième branche (14).

9. Plaquette de coupe (6) selon la revendication 8, **caractérisée en ce que** l'arête de coupe (12d) de la première branche (12) présente, au moins sur la portion distale (12b) et la portion centrale (12c), un profil concave, et **en ce que** l'arête de coupe (14d) de la deuxième branche (14) présente, au moins sur la portion distale (14b) et la portion centrale (14c), un profil convexe.

10. Outil de perçage (2), **caractérisé en ce qu'**il comporte un corps d'outil (4) ; et une plaquette de coupe (6) selon l'une quelconque des revendications 1 à 9, fixée à une extrémité du corps d'outil (4).

## Patentansprüche

1. Schneideinsatz (6), die dafür konzipiert ist, an einem Ende eines Werkzeugkörpers (4) befestigt zu werden, um in Drehung um eine Achse (8) herum versetzt zu werden, umfassend:
- einen Kern (10), der sich axial erstreckt; und
- mindestens einen ersten Schenkel (12) und einen zweiten Schenkel (14), die sich radial ab dem Kern (10) erstrecken, wobei der erste Schenkel (12) und der zweite Schenkel (14) jeder umfassen:
- einen proximalen Abschnitt (12a, 14a), der mit dem Kern (10) verbunden ist, einen distalen Abschnitt (12b, 14b), und einen mittleren Abschnitt (12c, 14c), der den proximalen Abschnitt (12a, 14a) und den distalen Abschnitt (12b, 14b) verbindet; und
- eine Schneidkante (12d, 14d), die sich mindestens über den distalen Abschnitt (12b, 14b) und den mittleren Abschnitt (12c, 14c) erstreckt;
wobei sich die Schneidkante (14d) des zweiten Schenkels (14) mindestens zum Teil axial weiter vorne befindet als die Schneidkante (12d) des ersten Schenkels (12), und
wobei die Schneideinsatz mindestens einen dritten Schenkel (16) umfasst, der einen mit dem Kern (10) verbundenen proximalen Abschnitt (16a), einen distalen Abschnitt (16b), und einen mittleren Abschnitt (16c) umfasst, welcher den proximalen Abschnitt (16a) und den distalen Abschnitt (16b) verbindet; und eine Schneidkante (16d), die sich mindestens über den distalen Abschnitt (16b) und den mittleren Abschnitt (16c) erstreckt; und **dadurch gekennzeichnet, dass** sich die Schneidkante (16d) des dritten Schenkels (16) mindestens zum Teil axial weiter vorne befindet als die Schneidkante (12d, 14d) des zweiten Schenkels (14).

2. Schneideinsatz (6) nach Anspruch 1, **dadurch gekennzeichnet, dass** jede Schneidkante (12d, 14d, 16d) des ersten Schenkels (12), des zweiten Schenkels (14) und des dritten Schenkels (16) einen Angriffspunkt (12e, 14e, 16e) umfasst, der axial nach vorne angeordnet ist, und dadurch, dass die Angriffspunkte (12e, 14e, 16e) des ersten Schenkels (12), des zweiten Schenkels (14) und des dritten Schenkels (16) in ein und derselben radialen Ebene (P) angeordnet sind.

3. Schneideinsatz (6) nach Anspruch 2, **dadurch gekennzeichnet, dass** jede Schneidkante (12d, 14d, 16d) des ersten Schenkels (12), des zweiten Schenkels (14) und des dritten Schenkels (16) einen Nachlaufpunkt (12f, 14f, 16f) umfasst, der axial nach hinten angeordnet ist; die Nachlaufpunkte (12f, 14f, 16f) des ersten Schenkels (12), des zweiten Schenkels (14) und des dritten Schenkels (16) in ein und derselben radialen Ebene (P') angeordnet sind; und sich die Schneidkanten (14d, 16d) des zweiten Schenkels (14) und/oder des dritten Schenkels (16) axial weiter vorne erstrecken als die Schneidkante (12d) des ersten Schenkels zwischen ihren jeweiligen Angriffspunkten (12e, 14e, 16e) und ihren Nachlaufpunkten (12f, 14f, 16f).

4. Schneideinsatz (6) nach einem der Ansprüche 1 bis 3, **dadurch gekennzeichnet, dass** der mittlere Abschnitt (16c) des dritten Schenkels (16) breiter ist als der distale Abschnitt (16b) des dritten Schenkels (16), sodass die Schneidkante (16d) des dritten Schenkels (16) einen Rücksprung aufweist.

5. Schneideinsatz (6) nach einem der Ansprüche 1 bis 4, **dadurch gekennzeichnet, dass** die Schneidkante (16d) des dritten Schenkels (16) eine kleinere Länge aufweist als die Schneidkante (12d) des ersten Schenkels (12) und/oder die Schneidkante (14d) des zweiten Schenkels (14).

6. Schneideinsatz (6) nach einem der Ansprüche 2 bis 5, **dadurch gekennzeichnet, dass** die Angriffspunkte (12e, 14e, 16e) des ersten Schenkels (12), des zweiten Schenkels (14) und des dritten Schenkels (16) um eine Aussparung (18) herum angeordnet sind, die am Ende des Kerns (10) ausgestaltet ist.

7. Schneideinsatz (6) nach Anspruch 6, **dadurch gekennzeichnet, dass** die Aussparung (18) einen Boden von allgemein konvexem Profil aufweist.

8. Schneideinsatz (6) nach einem der Ansprüche 1 bis 7, **dadurch gekennzeichnet, dass** der distale Abschnitt (12b) des ersten Schenkels (12) in Bezug auf den mittleren Abschnitt (12c) des ersten Schenkels (12) radial nach vorne angeordnet ist, und der mittlere abschnitt (14c) des zweiten Schenkels (14) in Bezug auf den distalen Abschnitt (14b) des zweiten Schenkels (14) radial nach vorne angeordnet ist.

9. Schneideinsatz (6) nach Anspruch 8, **dadurch gekennzeichnet, dass** die Schneidkante (12d) des ersten Schenkels (12) mindestens über den distalen Abschnitt (12b) und den mittleren Abschnitt (12c) ein konkaves Profil aufweist, und dadurch, dass die Schneidkante (14d) des zweiten Schenkels (14) mindestens über den distalen Abschnitt (14b) und den mittleren Abschnitt (14c) ein konvexes Profil aufweist.

10. Bohrwerkzeug (2), **dadurch gekennzeichnet, dass** es einen Werkzeugkörper (4); und eine Schneideinsatz (6) nach einem der Ansprüche 1 bis 9 umfasst, die an einem Ende des Werkzeugkörpers (4) befestigt ist.

## Claims

1. A cutting insert (6) designed to be fixed to an end of a tool body (4) in order to be driven in rotation about an axis (8), including:
- an axially extending core (10); and
- at least a first branch (12) and a second branch (14) extending radially from the core (10), the first branch (12) and the second branch (14) each comprising:
• a proximal portion (12a, 14a) connected to the core (10), a distal portion (12b, 14b), and a central portion (12c, 14c) connecting the proximal portion (12a, 14a) and the distal portion (12b, 14b); and
• a cutting edge (12d, 14d) extending at least on the distal portion (12b, 14b) and on the central portion (12c, 14c);
the cutting edge (14d) of the second branch (14) being, at least in part, axially further forward than the cutting edge (12d) of the first branch (12) and said cutting insert including at least a third branch (16) comprising a proximal portion (16a) connected to the core (10), a distal portion (16b), and a central portion (16c) connecting the proximal portion (16a) and the distal portion (16b); and a cutting edge (16d) extending at least over the distal portion (16b) and the central portion (16c); and **characterized in that** the cutting edge (16d) of the third branch (16) is, at least in part, axially further forward than the cutting edge (12d, 14d) of the second branch (14).

2. The cutting insert (6) according to claim 1, **characterized in that** each cutting edge (12d, 14d, 16d) of the first branch (12), the second branch (14) and the third branch (16) comprises a leading point (12e, 14e, 16e) disposed axially forward, and **in that** the leading points (12e, 14e, 16e) of the first branch (12), the second branch (14) and the third branch (16) are disposed in the same radial plane (P).

3. The cutting insert (6) according to claim 2, **characterized in that** each cutting edge (12d, 14d, 16d) of the first branch (12), the second branch (14) and the third branch (16) comprises a trailing point (12f, 14f, 16f) disposed axially rearward; the trailing points (12f, 14f, 16f) of the first branch (12), the second branch (14) and the third branch (16) are disposed in the same radial plane (P'); and the cutting edges (14d, 16d) of the second branch (14) and/or of the third branch (16) extend axially further forward than the cutting edge (12d) of the first branch between their leading points (12e, 14e, 16e) and their respective trailing points (12f, 14f, 16f).

4. The cutting insert (6) according to any one of claims 1 to 3, **characterized in that** the central portion (16c) of the third branch (16) is larger than the distal portion (16b) of the third branch (16), so that the cutting edge (16d) of the third branch (16) has a recess.

5. The cutting insert (6) according to any one of claims 1 to 4, **characterized in that** the cutting edge (16d) of the third branch (16) has a length smaller than the cutting edge (12d) of the first branch (12) and/or than the cutting edge (14d) of the second branch (14).

6. The cutting insert (6) according to any one of claims 2 to 5, **characterized in that** the leading points (12e, 14e, 16e) of the first branch (12), the second branch (14) and the third branch (16) are disposed around a cavity (18) arranged at the end of the core (10).

7. The cutting insert (6) according to claim 6, **characterized in that** the cavity (18) has a bottom with a generally convex profile.

8. The cutting insert (6) according to any one of claims 1 to 7, **characterized in that** the distal portion (12b) of the first branch (12) is disposed radially forward relative to the central portion (12c) of the first branch (12), and the central portion (14c) of the second branch (14) is disposed radially forward relative to the distal portion (14b) of the second branch (14).

9. The cutting insert (6) according to claim 8, **characterized in that** the cutting edge (12d) of the first branch (12) has, at least on the distal portion (12b) and the central portion (12c), a concave profile, and **in that** the cutting edge (14d) of the second branch (14) has, at least on the distal portion (14b) and the central portion (14c), a convex profile.

10. A drilling tool (2), **characterized in that** it includes a tool body (4); and a cutting insert (6) according to any one of claims 1 to 9, fixed to an end of the tool body (4).
